# EUROPEAN PATENT APPLICATION

(11) **EP 2 830 191 A1**
(43) Date of publication of application: **28.01.2015**
(21) Application number: 13763983.7
(22) Date of filing: 21.03.2013
(51) Int. Cl.: H02J 17/00, H02J 7/00, H01F 38/14

(54) **SECONDARY COIL OF RECEIVER FOR NON-CONTACT CHARGING SYSTEM**

(30) Priority: 23.03.2012 KR 20120030224
(71) Applicant: Kim, Seon Seob, Incheon 403-816 (KR)
(72) Inventor: Kim, Seon Seob, Incheon 403-816 (KR)
(74) Representative: Rees, Simon John Lewis
(86) International application number: PCT/KR2013/002332
(87) International publication number: WO 2013/141620

(57) **Abstract**

Provided is a secondary coil (40) applied to an electromagnetic induction type non-contact charging system according to the present invention, the secondary coil including: a substrate (41); a first coil 42 stacked on one side of the substrate (41) and having a first internal space (42a) formed in its center; a second coil 43 stacked on the other side of the substrate (41) and having a second internal space (43a) formed in its center; a first additional pattern (44) electrically connected to the first coil (42); and a second additional pattern (45) electrically connected to the second coil (43), wherein the first internal space (42a) and the second internal space (43a) are not vertically aligned, but "are non-overlappingly arranged" to deviate by a predetermined distance in a horizontal direction.

## Description

### Technical Field

The present invention relates, in general, to a non-contact charging system and, more particularly, to a secondary coil of a receiver for a non-contact charging system for charging a battery electrically connected to the secondary coil using electromagnetic induction generated between a primary coil of a transmitter and the secondary coil of the receiver, placed close to the primary coil.

### Background Art

A multi rechargeable battery has been widely used instead of a disposable battery to supply power to various portable devices as well as cellular phones. Typically, a wire (contact) charging method was widely used in the charging of the rechargeable battery, but the use of a non-contact (wireless) charging method has been recently increasing.

Examples of conventional arts regarding non-contact charging of cellular phones are the following: 'Contactless charging system of radio telephone' disclosed in Korean Patent Publication No. 10-1995-0005819 (published on May 31, 1995); 'Wireless charging system for cellular phone ' disclosed in Korean Patent Laid-Open Publication No. 10-2002-0063050 (published on August 1, 2002); 'Battery and charger of mobile communication terminal for wireless charging' of Korean Patent Laid-Open Publication No.10-2004-0019164 (published on March 5, 2004); 'System and method for wireless charging of a mobile communication terminal and mobile communication terminal therefor' disclosed in Korean Patent Laid-Open Publication No. 10-2004-0107110 (published on December 20, 2004); 'Mobile communication terminal and wireless charging device' of Korean Patent Laid-Open Publication No.10-2007-0033166 (published March 26, 2007); 'Battery charging apparatus of mobile communication terminal using wireless frequency of RFID reader' of Korean Patent No. 10-0867405 (granted on October 31, 2008); 'Wireless charging apparatus' Korean Utility Model Registration No. 20-0217303 (granted on January 8, 2001); 'Battery of cellular phone using wireless high frequency power as charging power source' of Korean Utility Model Registration No. 20-0400534 (granted on October 31,2005), and the like.

An electromagnetic induction type charging system, which is one type of non-contact charging systems, charges a battery using electromagnetic induction generated between a primary coil and a secondary coil by placing the secondary coil of a battery to be charged close to the primary coil installed in a transmitter (charger) to which an alternating current power source is supplied.

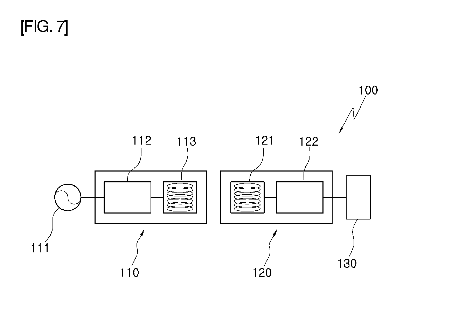

FIG. 7 is a schematic diagram of a general electromagnetic induction type non-contact charging system.

As illustrated therein, the electromagnetic induction type non-contact charging system 100 includes a transmitter 110 and a receiver 120.

The transmitter 110 has a transmission circuit 112 operated by receiving an alternating current power source 111, and a primary coil 113, and the receiver 120 has a secondary coil 121 causing electromagnetic induction with the primary coil 113 of the transmitter 110, and a charging circuit 122 controlling charging. Furthermore, in a state of connecting a battery 130 to the charging circuit 122, when placing the secondary coil 121 close to a predetermined position of the primary coil 113, the battery 130 is charged by an induction current induced in the secondary coil 121.

Reviewing an example in which non-contact charging is applied to a representative portable device, namely, a cellular phone, a product, which is configured such that "a charging cover" in which a receiver (the secondary coil and a charging circuit) is installed is produced separately with a cellular phone, and a battery is charged by putting "the charging cover" on a charger (transmitter), in a state in which the battery of the cellular phone is electrically connected to "the charging cover" via a connector or a cable, has been developed.

However, the "charging cover"-based charging method is inconvenient in that "the charging cover" should be separately provided for non-contact charging of the cellular phone. Thus, by embedding a receiver (a secondary coil and a charging circuit, wherein the charging circuit may be installed at a main body of the cellular phone) in a battery cover (a plastic synthetic resin cover intended for opening and closing a rear surface of the cellular phone for exchange of the battery), which is a part of the cellular phone, using, for example, in-mold injection, a technology for enabling non-contact charging with only the cellular phone itself without a separate "charging cover" has been developed.

In a case where non-contact charging is performed by electromagnetic induction, the primary coil and the secondary coil stacked vertically show maximum charging efficiency by generating a maximum induced electromotive force when respective centers thereof are exactly aligned with each other (when a vertically overlapping portion of the two coils has a maximum area). Furthermore, as the area of the vertically overlapping portion of the two coils reduces gradually, the induced electromotive force also reduces, and thus charging efficiency reduces gradually. As a result, charging is stopped.

The WPC (Wireless Power Consortium), which is preparing the standards of non-contact charging, has suggested certain methods as measures for improving charging efficiency of the non-contact charging.

A first method suggested by the WPC is a method of exactly maintaining a position of both the primary coil and the secondary coil using a magnetic force by mounting a permanent magnet in the center of each of the primary coil and the secondary coil (a magnetic method).

A second method is a method of exactly setting a position of the primary coil with respect to the secondary coil by detecting a position of the secondary coil and moving the primary coil to the position of the secondary coil using a motor when a receiver (the secondary coil) is put on a transmitter (the primary coil) (a motor control method).

A third method is a method of increasing an induced electromotive force between the primary coil and the secondary coil resulting from widely maintaining an overlapping area of the two coils by applying a current to the primary coil located nearest to the secondary coil when installing the multiple primary coils in the transmitter and then putting the secondary coil of the receiver thereon (a multiple primary coil-based method).

However, "the motor control method" and "the multiple primary coil-based method" are disadvantageous in that a product cost is relatively increased compared to "the magnetic method" due to an increase in the number of parts. Also, the motor control method has a limit in that a weight of the primary coil should be limited in order to reduce a load applied to the motor, and the multiple primary coil-based method is problematic in that a size of the transmitter is excessively increased due to an array structure of the primary coils, and the size of each of the primary coils should be limited.

Due to this, the motor control method and the multiple primary coil-based method cause a 10% or more reduction in charging efficiency compared to the magnetic method, and accordingly, the magnetic method is the most widely used method.

Due to its relatively low cost, the magnetic method is advantageous in that a vertical position of the primary coil and the secondary coil may be maintained with high precision. However, when the magnetic method is applied to a cellular phone, it is problematic in that a size and a weight of the cellular phone are increased due to the presence of a magnet, and the applied magnet causes malfunction of any other magnetic field devices mounted in the cellular phone (e.g., a compass, a gyro sensor or the like). Thus, many products have been designed without a magnet.

Another approach for supplementing charging efficiency of the non-contact charging system is a method of applying an algorithm of PID (Proportional Integral Differential) for the best power transmission control (see 5.2.3.1 Power transfer control of WPC Spec Ver1.0.3) (a power transmission control method).

According to the power transmission control method, a charging frequency used in non-contact charging is varied and used in the range of, for example, maximally 205 kHz and minimally 110 kHz. That is, in the best charging condition showing high charging efficiency in which the primary coil and the secondary coil are located at a corrected position, a charging frequency of 205 kHz or a range adjacent thereto is used. Furthermore, the primary coil and the secondary coil having deviated from the corrected position, and thus as charging efficiency reduces gradually, a low charging frequency of 110 kHz is used, and by gradually increasing a current applied to the primary coil, non-contact charging efficiency is entirely maintained in at least predetermined range.

However, according to the power transmission control method, even though charging efficiency is improved by changing the charging frequency in the range of, for example, 205 kHz to 110 kHz, and the range is within a range in which an induced electromotive force is generated; when the primary coil and the secondary coil have deviated from the corrected position, charging efficiency is reduced up to 20% or more compared to the maximum charging efficiency at, for example, the outermost position in which a minimal induced electromotive force is induced. Thus, there is a limit in that compensation for charging efficiency is not sufficiently performed.

Also, in the case of the outermost position showing low charging efficiency, in order to compensate for a shortage in a charging voltage due to a reduction of an induced electromotive force, a rectifier circuit of the secondary coil requires a higher voltage increase at the primary coil. This increased voltage is induced only to one side of the secondary coil to such an extent that the secondary coil deviates from the primary coil, so a current is increased, thereby causing heat during non-charging.

Examples of conventional arts for improving charging efficiency of a non-contact charging system are the following: 'Method and system for wireless charge' of Korean Patent Laid-Open Publication No. 10-2010-0074595 (published on July 2, 2010); 'Apparatus for non-contact charging' of Korean Patent No. 10-1063154 (granted on September 1, 2011); 'Wireless charger improved in variation of charging efficiency' of Korean Patent No. 10-0819604 (granted on March 28, 2008); 'Apparatus for supplying non-contact power and battery-charging with position recognizing function and charging system using the same' of Korean Patent Laid-Open Publication No. 10-2009-0025876 (published on March 11, 2009); 'Non-contact charging apparatus with charging state display function and charging method using the same' of Korean Patent Laid-Open Publication No.10-2009-0059507 (published on June 11, 2009); 'Mobile terminal having menu providing function for radio charging and charging method therefor' of Korean Patent Laid-Open Publication No.10-2009-0062224 (published on June 17, 2009) and the like.

### Disclosure

### Technical Problem

An object of the present invention is to improve charging efficiency of a non-contact charging system.

Another object of the present invention is to provide, with regard to a non-contact charging system for charging a battery using electromagnetic induction generated between a primary coil of a transmitter and a secondary coil of a receiver, the secondary coil of the receiver and the non-contact charging system, to which the same is applied, that can mitigate a reduction of charging efficiency resulting from separation of the secondary coil from a corrected position with respect to the primary coil.

### Technical Solution

The present invention provides a secondary coil of a receiver applied to a non-contact charging system for charging a battery electrically connected to the secondary coil using electromagnetic induction generated between the secondary coil and a primary coil by bringing the secondary coil close to the primary coil of the transmitter.

The secondary coil of the receiver according to the present invention may include: a substrate; a first coil; a second coil; a first additional pattern; and a second additional pattern.

The substrate may form a support surface.

The first coil may be formed in such a manner as to be stacked on one side of the substrate and be wound outwardly several times in one direction with a first internal space in its center.

The second coil may be formed in such a manner as to be stacked on the other side of the substrate and be wound outwardly several times in the same direction as that of the first coil with a second internal space in its center, and the second coil may be electrically connected to the first coil.

The first additional pattern may be formed on the other side of the substrate located at a non-overlapping portion of the first coil which does not overlap with the second coil and may be electrically connected to the first coil of the one side.

The second additional pattern may be formed on the one side of the substrate located at a non-overlapping portion of the second coil which does not overlap with the first coil and may be electrically connected to the second coil of the other side.

The first internal space of the first coil and the second internal space of the second coil are not vertically aligned with each other, but "are non-overlappingly arranged" to deviate by a predetermined distance in a horizontal direction.

The arrangement of the first coil and the second coil may exceed the range of a 0% non-overlapping arrangement in which a center of the first internal space and a center of the second internal space are aligned with each other, but may not exceed the range of a 100% non-overlapping arrangement in which the second coil deviates from the first coil in a horizontal direction to the extent of a diameter of the first internal space.

### Advantageous Effects

According to the present invention, with regard to a non-contact charging system for charging a battery using electromagnetic induction generated between a primary coil of a transmitter and a secondary coil of a receiver, as coils having a non-overlapping arrangement structure are applied as the secondary coil of the receiver, it is effective to mitigate a reduction of charging efficiency generated due to separation of the secondary coil from a corrected position with respect to the primary coil.

### Description of Drawings

FIG. 1 is a schematic diagram of an exemplary non-contact charging system to which the present invention is applied;
FIG. 2 is an exploded perspective view of an exemplary secondary coil according to the present invention; and
FIG. 3 is a surface view (A) and a rear view (B) of the exemplary secondary coil according to the present invention;
FIG. 4 is a plan view and a cross-sectional view of the exemplary secondary coil (A) according to the present invention and a secondary coil (B) as a comparative example;
FIG. 5 is a plan view of the exemplary secondary coil according to the present invention showing a 50% non-overlapping arrangement (A) and a 100% non-overlapping arrangement (B);
FIG. 6 is a position change arrangement view of the secondary coil (A) of the present invention and the secondary coil (B) of the comparative example to the primary coil, intended for measuring a change in an input current (charging efficiency); and
FIG. 7 is a schematic diagram of a general induced current type non-contact charging system.

### Best Mode

Hereinafter, the present invention will be described in detail with reference to the accompanying drawings. The detailed examples disclosed herein is for the purpose of exemplarily describing the present invention only and is not intended to limit a scope of the present invention.

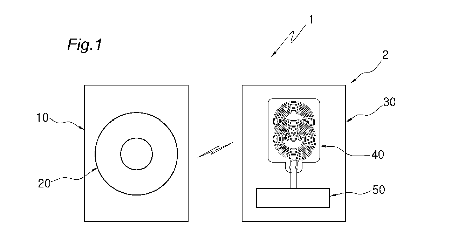

As illustrated in FIG. 1, like a conventional non-contact charging system applied to a cellular phone which is a representative portable device 2, a non-contact charging system 1 to which a secondary coil 40 of the present invention is applied includes: a transmitter 10 (e.g., a charging mat) in which a primary coil 20 is installed; and a receiver 30 (e.g., a cellular phone) in which the secondary coil 40 is installed. Hereinafter, a cellular phone will be mainly described as an example of the portable device 2, and the portable device and the cellular phone will refer to the same reference numeral 2 of the drawing.

As known, in addition to the primary coil 20 and the secondary coil 40, a circuit, ferrite and the like required for charging have been installed in the transmitter 10 and the receiver 30, but illustration or description thereon is omitted because these elements such as the circuit and the like are not directly relevant to the present invention.

Like the conventional non-contact charging system, the non-contact charging system 1 according to the present invention charges a battery 50 electrically connected to the secondary coil 40 using electromagnetic induction generated between the primary coil 20 and the secondary coil 40 when bringing the secondary coil 40 of the receiver close to the primary coil 20 of the transmitter 10.

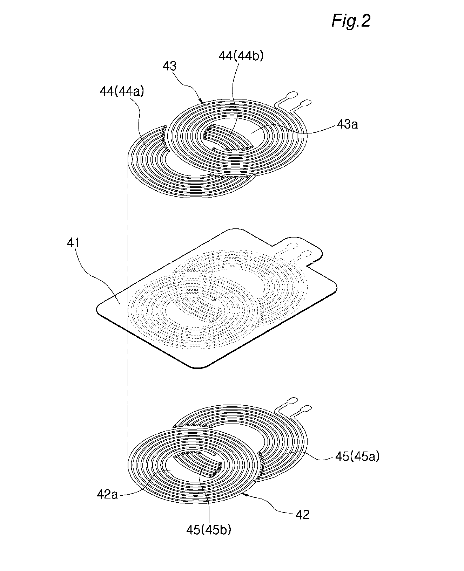

As illustrated in FIGS. 2 to 5, the secondary coil 40 according to the present invention has a vertically layered structure in which, based on a flat substrate 41, a first coil 42 is stacked on one side (e.g., a rear surface) of the substrate 41, and a second coil 43 is stacked on the other side (e.g., a surface) of the substrate 41, rather than a structure in which coils lined in a loop pattern are lined on a single surface.

The substrate 41 is a layer to or by which the first coil 42 and the second coil 43 are attached or supported, and an FPCB (flexible Printed Circuit Board), such as a thin film, a double-sided adhesive film, or the like, which is widely known in the relevant technical field, may be applied as the substrate 41.

The first coil 42 stacked on one side of the substrate 41 is a coil of a loop pattern which is wound outwardly several times in a one side direction with a first internal space 42a in its center. The second coil 43 stacked on the other side of the substrate 41 also is a coil of a loop pattern which is wound outwardly several times in the same direction as the first coil 42 with a second internal space 43a in its center.

When winding directions are opposed to each other, since the size of a magnetic field generated from the first coil 42 is offset by that generated from the second coil 43, the first coil 42 and the second coil 43 are wound in the same direction.

The first coil 42 and the second coil 43 become entirely one secondary coil 40 by electrically connecting respective inner ends of the first coil 42 and the second coil 43 through a via hole H1, and respective outer ends of the first coil 42 and the second coil 43 form terminal connection portions 42b, 43b connected to charging circuits.

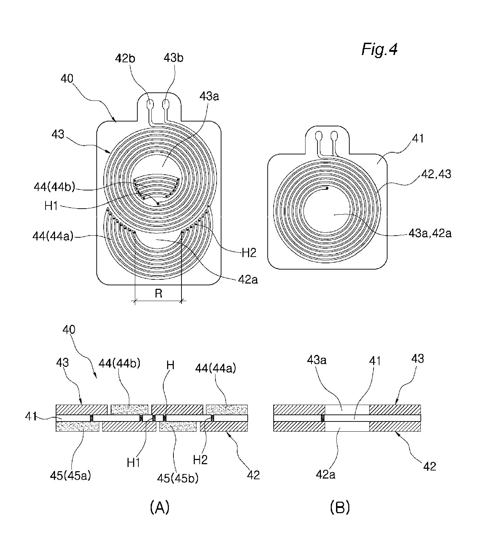

According to the characteristics of the present invention, as shown in B of FIG.4, the first coil 42 and the second coil 43 are not stacked such that the first internal space 42a and the second internal space 43a are exactly aligned vertically, but as shown in A of FIG. 4, the first coil 42 and the second coil 43 are stacked such that the first internal space 42a and the second internal space 43a deviate by a predetermined distance in a horizontal direction.

In the secondary coil 40 of the present invention, a state, in which the first internal space 42a of the first coil 42 and the second internal space 43a of the second coil 43 are non-overlappingly arranged to deviate by a predetermined distance rather than being arranged to be aligned vertically, refers to "a non-overlapping arrangement."

For example, when an arrangement in which a center of the first internal space 42a and a center of the second internal space 43a are exactly aligned with each other (an arrangement in which the first coil and the second coil being arranged to be exactly vertically aligned) refers to "a 0% non-overlapping arrangement," and an arrangement in which the second coil 43 deviates from the first coil in a horizontal direction to the extent of a diameter R of the first internal space 42a refers to "a 100% non-overlapping arrangement," in the secondary coil 40 of the present invention; a range of the non-overlapping arrangement of the second coil 43 to the first coil 42 may be ┌0%<the non-overlapping arrangement of the second coil≤100%┘. At this time, when each of the first internal space 42a and the second internal space 43a is not a circular shape but a quadrangular shape, the diameter R above is preferably a length of a short side of the quadrangular shape.

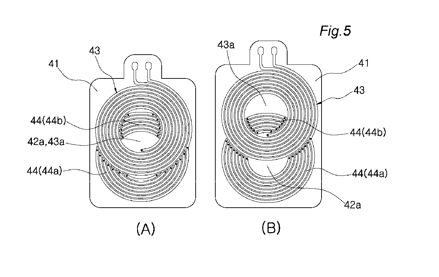

A of FIG. 5 illustrates "a 50% non-overlapping arrangement in which the second coil 43 deviates from the first coil 42 to the extent of a radius of the first internal space 42a, and B of FIG. 5 illustrates "a 100% non-overlapping arrangement" in which the second coil 43 deviates from the first coil 42 to the extent of the diameter R of the first internal space 42a. Furthermore, B of FIG. 4 illustrates "a 0% non-overlapping arrangement" in which the first internal space of the first coil 42 and the second internal space of the second coil 43 are completely aligned.

Since the secondary coil 40 of the present invention is configured such that the first coil 42 of one side of the substrate 41 and the second coil 43 of the other side of the substrate 41 are non-overlappingly arranged to deviate from each other by a predetermined distance in a horizontal direction, rather than being arranged to be aligned vertically, the first coil 42 and the second coil 43 form a layered structure in which a vertically overlapping portion and a non-overlapping portion with the substrate 41 between the first coil and the second coil co-exist.

That is, in the overlapping portion, the first coil 42, the substrate 41 and the second coil 43 exist vertically, and in the non-overlapping portion, only the substrate 41 and the first coil 42 exist, or only the substrate 41 and the second coil 43 exist.

The secondary coil 40 according to the present invention is configured such that, as illustrated in A of FIG. 4, in the non-overlapping portion of the first coil 42 which does not overlap with the second coil 43, a first additional pattern 44 electrically connected to the first coil 42 is formed to be stacked on the other side of the substrate 41. Similarly, in the non-overlapping portion of the second coil 43 which does not overlap with the first coil 42, a second additional pattern 45 electrically connected to the second coil 43 is stacked on one side of the substrate 41.

Preferably, the first additional pattern 44 is formed over the largest area in a scope which does not cause a short with the second coil 43. Similarly, the second additional pattern 45 is also formed over the largest area in a scope which does not cause a short with the first coil 42.

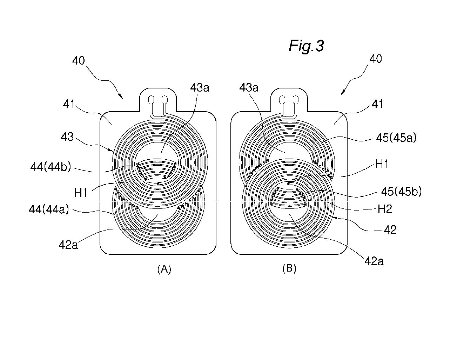

As illustrated in FIG. 3, when the circular first coil 42 and the circular second coil 43 may be non-overiappingly arranged to deviate by a predetermined distance in a horizontal direction while being disposed to non-overlap to the extent of at least a distance in which the internal spaces 42a, 43a partially overlap each other; in the non-overlapping portion of the first coil 42, the relatively large arc-shaped first additional pattern 44a being present on the outside of the second internal space 43a and the relatively small arc-shaped first additional pattern 44b being present on the inside of the second internal space 43a may be formed.

Similarly, in the non-overlapping of the second coil 43, the relatively large arc-shaped second additional pattern 45a being present on the outside of the first internal space 42a and the relatively small arc-shaped second additional pattern 45b being present on the inside of the first internal space 42a may be also formed.

At this time, preferably, the first additional pattern 44 is lined in the same pattern as the first coil 42 of a correspond portion being present in an opposite side of the substrate 41, and the second additional pattern 45 is lined in the same pattern as the second coil 43 of a correspond portion being present in an opposite side of the substrate 41.

The secondary coil 40 according to the present invention may be produced by etching, for example, a conductive thin film in which a conductive thin membrane, such as a copper foil (or copper plating) having a thickness of 0.0175 mm (0.5 ounces) to 0.105 mm (3 ounces) is applied to both the upper and lower surfaces of a base thin film such as a polyimide film as the substrate 41 having a thickness of 0.025 mm or less.

That is, both the upper and lower surfaces of the conductive thin film is etched to be aligned with targeted patterns of the first coil 42 and the second coil 43 of the secondary coil 40, and the via hole H1 is formed at a position corresponding to the inner ends of the first coil 42 and the second coil 43, thereby producing the secondary coil by performing soldering through the via hole to electrically connect the inner ends.

The first additional pattern 44 and the second additional pattern 45 may be formed in such a manner that when the first coil 42 and the second coil 43 are formed on both sides of the substrate 41 by etching the double-sided conductive thin membrane of the conductive thin film; the first additional pattern 44 and the second additional pattern 45 are also formed together by etching, and thereafter, soldering is performed through the via hole H2, so that respective wires of the first additional pattern 44 are electrically connected to corresponding respective wires of the first coil 42 opposite to the substrate 41, and similarly, respective wires of the second additional pattern 45 are electrically connected to corresponding respective wires of the second coil 43 opposite to the substrate 41,

When the first coil 42 and the second coil 43 are formed by etching the double-sided conductive thin membrane of the double-sided conductive thin film, since the first additional pattern 44 and the second additional pattern 45 are formed at the conductive thin membrane of a portion which is removed due to corrosion, the first additional pattern and the second additional pattern may be formed without additional injection of a material.

In the secondary coil 40 according to the present invention, the first additional pattern 44 and the second additional pattern 45 are limitedly applied to only the non-overlapping portion, and the first additional pattern and the second additional pattern do not cause an increase in a maximum thickness of the secondary coil 40, but partially increase a thickness of each of the first coil 42 and the second coil 43, thereby entirely enabling a reduction in resistance of the secondary coil. As a result, the first additional pattern and the second additional pattern are useful for improving charging efficiency and reducing heat.

The present inventor has produced the secondary coil 40 according to the present invention by applying the 50% non-overlapping arrangement and the 100% non-overlapping arrangement and has also produced, under the same other conditions, the secondary coil (the comparative example, B of FIG. 4) to which the 0% non-overlapping arrangement resulting from placing the first coil and the second coil to be exactly aligned with each other is applied. In a state in which each of the secondary coil 40 of the present invention and the secondary coil of the comparative example is placed on the primary coil 20 having the same properties under the same conditions, and a charging current of the battery 50 is set as 600 mA, a value of an input current consumed in the transmitter of the primary coil 20 was measured.

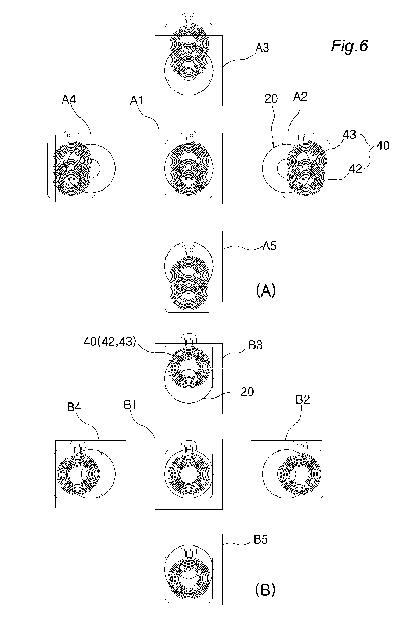

At this time, a position of the secondary coil 40 placed on the primary coil 20 is the same as shown in FIG. 6, wherein A of FIG. 6 is a view in which the secondary coil 40 of the present invention is applied, and B of FIG. 6 is a view in which the secondary coil of the comparative example is applied. In FIG. 6, A1 and B1 show a state in which the second coil 43 is correctly positioned with respect to the first coil 42 (a preferable state having the highest charging efficiency), and A2 and B2, A3 and B3, A4 and B4, and A5 and B5 show respective states in which the second coil 43 deviates from the first coil 42 up to 10 mm to the right, the upper side, the left and the lower side (a state having lower charging efficiency than the highest charging efficiency).

With regard to the secondary coil (A of FIG. 6) of the present invention to which the 50% non-overlapping arrangement and the 100% non-overlapping arrangement are applied, and the secondary coil (B of FIG. 6) of the comparative example to which the 0% non-overlapping arrangement is applied, measurement values of each input current in the transmitter including the first coil 42, measured at five positions of FIG. 6, are the same as shown in Table 1.

**[Table 1]**

| 50% non-overlapping arrangement (Present Invention) | | 100% non-overlapping arrangement (Present Invention) | | 0% non-overlapping arrangement (Comparative Example) | |
|---|---|---|---|---|---|
| Position | Input Current (mA) | Position | Input Current (mA) | Position | Input Current (mA) |
| A1 | 220 | A1 | 220 | B1 | 230 |
| A2 | 256 | A2 | 250 | B2 | 260 |
| A3 | 255 | A3 | 250 | B3 | 260 |
| A4 | 255 | A4 | 250 | B4 | 260 |
| A5 | 255 | A5 | 250 | B5 | 260 |

As can be seen from Table 1, in the best preferable case (A1, B1) where the secondary coil 40 is correctly positioned with respect to the primary coil 20, in both the present invention and the comparative example, the input current of the primary coil was 220 mA, and thus a minimum value showing maximum charging efficiency was measured, and there was no difference between the present invention and the comparative example.

In the case (A2 to A5 and B2 to B5) where the secondary coil 40 is located to deviate from the primary coil 20 in a horizontal direction to the extent of a distance of 10 mm, and thus a reduction of charging efficiency is expected, the comparative example of the 0% non-overlapping arrangement showed that the input current is 260 mA. On the contrary, in the case where the secondary coil 40 according to the present invention is applied, it was measured that the input current is 256 mA and 255 mA in the case of the 50% non-overlapping arrangement, and the input current is 250 mA in the case of the 100% non-overlapping arrangement.

As a result, comparing the secondary coil of the comparative example with the secondary coil 40 of the present invention, it can be seen that when each of the two secondary coils is placed at a corrected position with respect to the primary coil, the two secondary coils have the same charging efficiency; but when each of the two secondary coils deviates from the corrected position with respect to the primary coil, and thus a reduction of charging efficiency occurs, the secondary coil of the present invention shows charging efficiency reduced compared to that of the secondary coil of the comparative example (the input current used in obtaining the same charging current of 600 mA is relatively low).

That is, when the secondary coil of the present invention is applied, it can be seen that a reduction of charging efficiency generated upon performing charging in a state of the secondary coil having deviated from a corrected position with respect to the primary coil can be remarkably mitigated. Also, it can be seen that such an effect of mitigating the reduction in charging efficiency increases gradually as a level of the non-overlapping arrangement increases within the range of a maximally 100% non-overlapping arrangement.

Moreover, with respect to a structure in which a level of the non-overlapping arrangement exceeds 100%, an input current of the primary coil was also additionally measured. As a result, when the secondary coil deviates from a corrected position with respect to the primary coil, the effect of mitigating the reduction in charging efficiency became lower than that resulting from the 100% non-overlapping arrangement up to any ranges exceeding 100%. However, the charging efficiency was increased compared to the case of the 0% non-overlapping arrangement of the comparative example, and when the secondary coil and the primary coil are placed at the corrected position, the cases of non-overlapping arrangements which exceed the range of the 100% non-overlapping arrangement showed low charging efficiency compared to all cases of non-overlapping arrangements which do not exceed the range of the 100% non-overlapping arrangement.

Furthermore, when the level of a non-overlapping arrangement exceeds the range of 100%, it is difficult to perform a process for electrically connecting the respective inner ends of the first coil 42 and the second coil, and it is problematic in that an area occupied by the secondary coil is excessively increased. Thus, it is preferable that the level of the non-overlapping arrangement does not exceed the range of 100%.

The effect of charging efficiency resulting from the non-overlapping arrangement of the secondary coil 40 is achieved by a reduction of magnetic field loss of an induced electromotive force induced between the primary coil and the secondary coil.

The secondary coil 40 of the present invention in used in the above measurement is produced by etching the conductive thin film of a double-sided copper foil having a thickness of 2 ounces, an inductance value is 10uH, an outer diameter R1 of the first coil 42 and the second coil 43 is 43 mm ± 10 mm, an inner diameter R2 thereof is 27 mm. Furthermore, the number of loop rotations of a loop pattern for each of the first coil 42 and the second coil 43 is a total of 8 and 16, a loop width of each rotation is 1 mm, and a distance between the loops is 0.15 mm.

The copper foil applied to the secondary coil may have various thicknesses in the range of 1 to 3 ounces. A change of the coil inductance value due to a thickness difference may be ignored, but a resistance value is reduced when using a copper foil having a thickness of 2 ounces rather than a copper foil having a thickness of 1 ounce. In the case of the secondary coil used in the above measurement, based on the 0% non-overlapping arrangement, each resistance value of the secondary coil is about 800 mΩ upon in the case of the copper foil having the thickness of 1 ounce, 500 mΩ in the case of the copper foil having the thickness of 2 ounces, and 300 mΩ in the case of the copper foil having the thickness of 3 ounces.

As such, in the second coil, the change of the inductance value resulting from the change in the thickness of the copper foil is insignificant, but the resistance value causes a significant difference. Accordingly, in order to reduce the resistance value, there is a need to increase a thickness of the copper foil.

However, in order to increase the thickness of the copper foil up to at least 3 ounces for a reduction of the resistance value of the secondary coil, an etching process should be performed 2 to 3 times for improvement of the degree of accuracy. Even though the resistance value may be reduced by increasing a loop width of the pattern in the same thickness of the copper foil, when the loop width is increased, the number of loop rotations matched with the inductance value becomes lack, and thus a multi-layer structure and the like should be adopted. As a result, commercialization of these methods causes rise in costs.

In the case of the secondary coil 40 according to the present invention used in the above measurement, with regard to a reduction in the resistance value resulting from the addition of the first additional pattern 44 and the second additional pattern 45, based on the 0% non-overlapping arrangement in which no additional pattern is present, the resistance value of about 20% is reduced in the case of the 50% non-overlapping arrangement, and the resistance value of about 40% is reduced in the case of the 100% non-overlapping arrangement. At this time, in the case of the secondary coil which is based on the 50% or 100% non-overlapping arrangement, and to which the first additional pattern 44 and the second additional pattern 45 are not applied, the resistance value thereof is substantially identical to that shown in the 0% non-overlapping arrangement.

Accordingly, the secondary coil 40 according to the present invention is also very effective to reduce the resistance value without an increase in a thickness of the copper foil or applying a multi-layer structure because the copper foil to be processed by etching is used as the additional patterns 44, 45.

In a charging circuit of the receiver, since entire power consumed for charging is supplied through the secondary coil of the receiver, an inductance value and a resistance value of the secondary coil of the receiver are important. In a case where currents flowing into the secondary coil are the same, when resistance of the secondary coil is high, relatively high heat occurs because consumed power increases, and when resistance of the secondary coil is low, heat becomes also lower because power consumed in the same current becomes lower. For example, in the receiver, when the battery is charged in 600 mA, and a thickness of the copper foil of the secondary coil is changed from 1 ounce to 2 ounces, a heat-generating temperature of the secondary coil may be down about 3 degrees, and when the thickness of the copper foil is changed from 1 ounce to 3 ounces, the heat-generating temperature may be additionally further reduced up to about 3 degrees. In the secondary coil 40 according to the present invention used in the measurement, whenever the resistance value is reduced up to 100 mΩ by applying the first additional pattern 44 and the second additional pattern 45, the heat-generating temperature may be reduced up to about 1 degree.

Like the present invention, in a case where the non-overlapping arrangement is applied to the secondary coil 40, when the transmitter is moved on the receiver, a change of an overlapping area of the primary coil and the secondary coil becomes relatively low, and accordingly, a change of the magnetic field induced in the secondary coil is small. Thus, when changing the aforesaid charging frequency for complementing charging efficiency, it is effective to stabilize a change amount of the charging frequency.

As described above, the present invention has been described based on the case in which the secondary coil 40 is formed in a structure of the non-overlapping arrangement, but the improvement effect of charging efficiency is also expected from a case in which the non-overlapping arrangement as that in the secondary coil of the present invention is applied to the primary coil 20, and a case in which the non-overlapping arrangement is applied to both the primary coil and the secondary coil.

Also, the secondary coil 40 of the illustrated detailed examples is exemplified as a circular loop which is the best general form, but the secondary coil may be formed in other loop patterns, such as a quadrangular loop and the like, other than the circular loop without being limited thereto.

## Claims

1. A secondary coil of a receiver for a non-contact charging system, the secondary coil (40) of the receiver (3) being applied to the non-contact charging system for charging a battery electrically connected to the secondary coil using electromagnetic induction generated between a primary coil (20) and the secondary coil (40) by bringing the secondary coil (40) of the receiver (30) close to the primary coil (20) of the transmitter (10), the secondary coil comprising:
a substrate (41) forming a support surface;
a first coil (42) stacked on one side of the substrate (41) and formed by being wound outwardly several times in one direction with a first internal space (42a) in its center;
a second coil (43) stacked on the other side of the substrate (41) and formed by being wound outwardly several times in the same direction as that of the first coil (42) with a second internal space (43a) in its center, the second coil being electrically connected to the first coil (42);
a first additional pattern (44) formed on the other side of the substrate (41) located in a non-overlapping portion of the first coil (42) which does not overlap with the second coil (43), and electrically connected to the first coil (42) of the one side; and
a second additional pattern (45) formed on the one side of the substrate (41) located in a non-overlapping portion of the second coil (43) which does not overlap with the first coil (42), and electrically connected to the second coil (43) of the other side;
wherein the first internal space (42a) of the first coil (42) and the second internal space (43a) of the second coil (43) are not exactly vertically aligned, but are non-overlappingly arranged to deviate by a predetermined distance in a horizontal direction.

2. The secondary coil of claim 1, wherein an non-overlapping arrangement of the first coil (42) and the second coil (43) exceeds a range of a 0% non-overlapping arrangement in which a center of the first internal space (42a) and a center of the second internal space (43a) are aligned with each other, but does not exceed a range of a 100% non-overlapping arrangement in which the second coil (43) deviates from the first coil (42) in a horizontal direction to the extent of a diameter (R) of the first internal space (42a).
